# EUROPÄISCHE PATENTSCHRIFT

(11) **EP 3 901 074 B1**
(45) Veröffentlichungstag und Bekanntmachung des Hinweises auf die Patenterteilung: **21.08.2024**
(21) Anmeldenummer: 20214678.3
(22) Anmeldetag: 16.12.2020
(51) Int. Cl.: B65H 31/30, B65H 31/20, B65H 31/02, B65G 25/02

(54) **TRANSPORTVORRICHTUNG FÜR EINEN STAPEL VON FALTSCHACHTELN, UND ENTSPRECHENDES VERFAHREN ZUM TRANSPORTIEREN VON STAPELN VON FALTSCHACHTELN**
TRANSPORT DEVICE FOR A STACK OF FOLDING BOXES, AND CORRESPONDING METHOD FOR TRANSPORTING STACKS OF FOLDING BOXES
DISPOSITIF DE TRANSPORT POUR UNE PILE DE BOÎTES PLIANTES, ET PROCÉDÉ CORRESPONDANT POUR TRANSPORTER DES PILES DE BOÎTES PLIANTES

(30) Priorität: 19.12.2019 DE 102019135242
(43) Veröffentlichungstag der Anmeldung: 27.10.2021
(73) Patentinhaber: Wilhelm B a h m ü l l e r Maschinenbau Präzisionswerkzeuge GmbH, 73655 Plüderhausen (DE)
(72) Erfinder: Wietzmann, Uwe, 73547 Lorch (DE)
(74) Vertreter: DREISS Patentanwälte PartG mbB

(56) Entgegenhaltungen:
- EP-A1- 1 518 807

## Beschreibung

Bei Verarbeitung von Wellpappe zu fertigen Faltschachteln sind verschiedene Transportvorgänge innerhalb der Prozesskette erforderlich. Am Ende des Herstellungsprozesses werden mehrere fertige Faltschachteln zu einem Stapel gestapelt und anschließend in einer Vorrichtung zum Bündeln zu einem Bündel verschnürt. Das Bilden eines Stapels fertiger Faltschachteln erfolgt in einem sogenannten Schachtmodul. Das Schachtmodul umfasst, vereinfacht gesprochen, einen Pufferraum in den die fertigen Faltschachtel aus einem Strom von Faltschachteln hineinströmen. An dem in Transportrichtung hinteren Ende des Pufferraums ist ein vefahrbarer Anschlag vorhanden. Die in den Pufferraum strömenden Faltschachteln prallen gegen den Anschlag und werden dadurch positioniert bzw. ausgerichtet. Sobald die gewünschte Zahl von Faltschachteln übereinandergestapelt ist, wird dieser Stapel aus dem Schachtmodul heraustransportiert und in den Arbeitsraum einer daran anschließenden Vorrichtung zum Bündeln (nachfolgend Bündelvorrichtung) geschoben werden. Unmittelbar danach wird in dem Pufferraum der nächste Stapel gebildet.

Die Erfindung betrifft eine Vorrichtung zum Transportieren eines Stapels von Faltschachteln, die bevorzugt an dem Übergang zwischen dem Schachtmodul und der Bündelvorrichtung einsetzbar ist. Bei der Übergabe bzw. dem Transportieren des Stapels in den Arbeitsraum der Bündelvorrichtung ist eine Besonderheit von modernen Bündelvorrichtungen zu beachten:
Die Bündelvorrichtungen haben in der Regel einen Stichel, der - in Transportrichtung gesehen - senkrecht hinter dem Stapel von Faltschachteln herunterfährt, um das Umreifungsband um den Stapel zu führen. Der Stapel von Faltschachteln muss also in Transportrichtung mit seiner Hinterkante so weit in den Arbeitsraum der Bündelvorrichtung geschoben werden, dass der Stichel von oben kommend hinter dem Stapel herunterfahren kann.

Aus dem Stand der Technik sind Transportvorrichtungen bekannt, bei denen ein Schieber den Stapel aus dem Stapeltraum in den Arbeitsraum der Bündelvorrichtung schiebt. Der Schieber befindet sich hinter dem Stapel. Wenn der in dem Pufferraum entstehende Stapel die vorgegebene Zahl von Faltschachteln aufweist, bzw. die vorgegebene Höhe hat, wird der Antrieb des Schiebers aktiviert, so dass der Schieber den Stapel in den Arbeitsraum der Bündelvorrichtung transportiert. Danach bewegt sich der Schieber wieder in seine Startposition in dem Pufferraum.

Um eine Kollision des Schiebers mit dem im Pufferraum des Schachtmoduls entstehenden Stapels zu verhindern, muss der Schieber bei der Rückbewegung so weit nach unten abtauchen, dass er unter dem Stapel hindurch wieder an seine Startposition gelangt.

Bei den am Markt befindlichen Transportvorrichtungen wird der Schieber durch eine geschlossene Kette geführt, die über mehrere Kettenräder mehrfach umgelenkt wird (nachfolgend als Kettentrum bezeichnet). Die Position der Kettenräder ist nicht veränderbar und gibt die Bewegung des Schiebers beim Transport des Stapels (Transportbewegung) und bei der anschließenden Rückbewegung vor. Diese Vorrichtungen haben mehrere Nachteile: Die Bewegung des Schiebers ist sowohl beim Transport des Stapels als auch bei der Rückbewegung des Schiebers in die Startposition durch die Anordnung der Kettenräder fest vorgegeben.

Das ist vor allem dann nachteilig, wenn verschieden große Faltschachteln und damit verschieden große Stapel transportiert werden sollen. Der Transportweg des Schiebers ist so bemessen, dass er einen Stapel von Faltschachteln, deren Abmessungen maximal sind, aus dem Schachtmodul die Bündelvorrichtung schieben kann. Wenn nun beispielsweise Faltschachteln gestapelt werden, deren Länge nur halb so groß ist wie die maximal mögliche Länge der Faltschachteln, dann muss der Schieber den gleichen Transportweg durchführen. In anderen Worten: Die Hälfte der Transportbewegung ist "unproduktiv". Natürlich dauert dann auch die Rückbewegung des Schiebers länger als notwendig. Beide Effekte reduzieren die Transportkapazität.

Ein weiterer Nachteil an diesen Transportvorrichtungen ist darin zu sehen, dass der Schieber schon vor dem Erreichen des Endpunkts seines Transportwegs nach unten abtaucht. Das Abtauchen des Schiebers am Ende der Transportbewegung ist eine zwangsläufige Folge davon, dass die Kette über Kettenräder geführt wird. Am Ende der Transportbewegung folgt der Schieber der Kette, die über eines der Kettenräder eine kreisbogenförmige Abwärtsbewegung macht; der Schieber "taucht ab".

Wenn der Stapel sehr hoch ist, werden die obersten Faltschachteln des Stapels am Ende der Transportbewegungen nicht mehr von dem Schieber geschoben. Das kann dazu führen, dass die obersten Faltschachteln eines Stapels nach hinten rutschen und der Stapel seine Form verliert. Kollisionen mit dem Stichel der Bündelvorrichtung sind eine mögliche Folge davon. Diese Kollision führt zwangsläufig zu einer Produktionsunterbrechung und ist daher unbedingt zu vermeiden.

Aus der EP 1 5168 807 A1 ist eine gattungsgemäße Transportvorrichtung für einen Stapel von Faltschachteln bekannt.

Der Erfindung liegt die Aufgabe zugrunde, eine Transportvorrichtung für einen Stapel von Faltschachteln oder anderer übereinander gestapelter Güter bereitzustellen, welche die Nachteile des Standes der Technik vermeiden. Sie soll flexibler hinsichtlich ihrer Transportbewegung und ihrer Rückbewegung sein und außerdem soll, bei sonst gleichen Voraussetzungen, die Kapazität bzw. der Ausstoß der Transportvorrichtung erhöht werden. Dies Aufgabe wird bei einer Vorrichtung zum Transportieren eines Stapels von Faltschachteln umfassend eine Auflage für den Stapel von Faltschachteln und mindestens einen Schieber, wobei der mindestens eine Schieber bei der Transportbewegung in vertikaler Richtung über die Auflage hinausragt und mindestens ein Teil seiner Rückbewegung so erfolgt, dass der Schieber nicht über die Auflage hinausragt, erfindungsgemäß dadurch gelöst, dass der mindestens eine Schieber auf einem ersten Schlitten einer ersten Linearführung angebracht ist, und dass eine erste Führungsschiene der ersten Linearführung an einem zweiten Schlitten einer zweiten Linearführung befestigt ist.

Die beanspruchte Erfindung löst sich also von der bekannten Führung des Schiebers durch ein Kettentrum, sondern sieht zwei in der Regel rechtwinklig zueinander angeordnete Linearführungen vor. Diese Linearführungen ermöglichen eine freie Konfiguration der Transportbewegung und der Rückbewegung. So kann beispielsweise, wenn kurze Stapel von Faltschachteln transportiert werden sollen, der Transportweg verkürzt werden. Dadurch entfallen die oben erwähnten "Totzeiten" bei der Transportbewegung. Weil die Rückbewegung immer nur so lang ist wie die Transportbewegung, verkürzt sich auch die Rückbewegung. Wegen des verkürzten Hin- und Rückwegs verringert sich auch die Zykluszeit für einen Transportvorgang. Im Ergebnis wird der Ausstoß bzw. die Förderkapazität der erfindungsgemäßen Transportvorrichtung deutlich erhöht. Es ist auch möglich, das Auftauchen des Schiebers bei der Rückbewegung kurz vor dem Erreichen der Startposition zu optimieren, weil der Schieber nur so weit über die Auflage hinausragen muss, wie der zu transportierende Stapel hoch ist. Wenn der Schieber weniger weit über die Auflage hinausragt, dann verkürzt sich auch die Abtauchbewegung nach der Transportbewegung und am Anfang der Rückbewegung. Beide Effekte erhöhen die Transportkapazität.

Ein weiterer Vorteil der erfindungsgemäßen Transportvorrichtung ist darin zu sehen, dass der Schieber bis zum Ende der Transportbewegung eine geradlinige Bewegung ausführt, die in der Regel parallel zu der Auflage für den Stapel verläuft. Dadurch ändert sich die Höhe des Schiebers bezogen auf die Auflage während der Transportbewegung nicht; das aus dem Stand der Technik ein "Abtauchen" des Schiebers am Ende der Transportbewegung findet nicht statt. D.h. der Stapel von Faltschachteln wird bis zum Ende der Transportbewegung über die gesamte Höhe von dem Schieber gestützt und geschoben, so dass ein sicherer Transport aller Faltschachteln eines Stapels bis zum Erreichen des gewünschten Endpunkts der Transportbewegung im Arbeitsraum der Bündelvorrichtung immer gewährleistet ist.

Wie bereits erwähnt, muss der Schieber bei der Rückbewegung nach unten abtauchen, damit er unter dem nächsten Stapel, der sich im Pufferraum bildet, hindurch an die Startposition gelangt, ohne mit dem nächsten Stapel zu kollidieren. Die Rückbewegung erfordert daher eine koordinierte Bewegung des Schiebers auf der ersten und der zweiten Linearführung bzw. den zugehörigen Antrieben.

Die erfindungsgemäße erste Linearführung bewirkt das "Abtauchen" des Schiebers bei der Rückbewegung entsprechend den Anforderungen und den Abmessungen der zu transportierenden Stapel. Dabei wird das Abtauchen so gestaltet, dass der Schieber sich schnell genug nach unten bewegt (Abtauchen), dass er bei der Rückbewegung nicht mit dem Stapel kollidiert, der sich im Pufferraum des Schachtmoduls bildet. Bei der Rückbewegung des Schiebers ist die Vorderkante dieses sich bildenden Stapels der kollisionsgefährdete Punkt. Man kann bei der erfindungsgemäßen Vorrichtung die Abtauchbewegung des Schiebers vor oder während der Rückbewegungen entsprechend der Abmessung und der Position des Stapels im Pufferraum anpassen.

Andererseits ist man bestrebt, um die Belastung der Antriebe und der Mechanik zu minimieren, den Schieber nur so langsam wie möglich abtauchen zu lassen. Dieser Optimierungsprozess kann für jede Größe von Faltschachteln; d. h. individuell für jeden Auftrag durchgeführt werden.

Mit der erfindungsgemäßen Vorrichtung kann auch die Höhe des Schiebers über der Auflage an die Höhe des zu transportierenden Stapels angepasst werden. Bei niedrigen Stapeln ragt der Schieber bei der Transportbewegung weniger weit über die Auflage des Stapels hinaus. Entsprechend verkürzen sich die Abtauchbewegung zu Beginn der Rückbewegung und die Auftauchbewegung am Ende der Rückbewegung. Beide Effekte reduzieren die Belastungen der Antriebe und Linearführungen und erhöhen die Transportkapazität.

Um die Steifigkeit der gesamten Anordnung und insbesondere das Ausweichen des Schiebers nach hinten während der Transportbewegung zu vermeiden, ist in vorteilhafter Ausgestaltung der Erfindung parallel zu der zweiten Linearführung, welche die Transportbewegung ausführt, eine dritte Linearführung vorgesehen. Die erste Führungsschiene der ersten Linearführung ist zusätzlich an einem dritten Schlitten der dritten Linearführung befestigt. Dadurch ergibt sich eine sehr steife Konstruktion, so dass der Schieber auch bei hohen Beschleunigungen und schweren Stapeln die zum Transport der Stapel erforderlichen Kräfte sicher und ohne, dass die Transportvorrichtung nachgibt, auf den Stapel übertragen kann.

Erfindungsgemäß ist weiter vorgesehen, dass die Transportvorrichtung einen ersten Antrieb zum Verfahren des ersten Schlittens auf der ersten Führungsschiene aufweist. In entsprechender Weise ist in weiterer vorteilhafter Ausgestaltung vorgesehen, dass ein zweiter Antrieb zum Verfahren des zweiten Schlittens auf der zweiten Führungsschiene der zweiten Linearführung und des optionalen dritten Schlittens auf der optionalen dritten Führungsschiene der dritten Linearführung aufweist.

Durch diese beiden Antriebe ist es möglich, den Schieber in den beiden durch die Linearführungen vorgegebenen Bewegungsrichtungen unabhängig voneinander anzutreiben und zu bewegen. Somit ist es möglich, die Transportbewegung und die Rückbewegung des Schiebers den Anforderungen jedes Anwendungsfalls entsprechend zu optimieren, indem der erste Antrieb und der zweite Antrieb aufeinander abgestimmt gesteuert werden.

Der erste Antrieb und/oder der zweite Antrieb können einen Servomotor, einen Schrittmotor oder einen Linearmotor aufweisen. Ein Servomotor bedeutet, dass, unabhängig von der Belastung, die Position des ersten Schlittens und des zweiten Schlittens bekannt ist. Dadurch ist es möglich, die Ist-Position des Schiebers in einem geschlossenen Regelkreis mit einer Soll-Position abzugleichen. Dadurch kann nahezu jede gewünschte Bewegung des Schiebers mit hoher Wiederholgenauigkeit realisiert werden. Entsprechendes gilt auch, wenn ein Linearmotor oder ein Schrittmotor verwendet wird.

Wenn als Antriebe ein Servomotor oder ein Schrittmotor eingesetzt wird, dann können diese über einen Zahnriemen, eine Kette oder eine Gewindespindel mit dem ersten Schlitten bzw. mit dem zweiten Schlitten verbunden sein. Dadurch ist es in an sich bekannter Weise möglich, die Drehbewegung des Servomotors bzw. des Schrittmotors in eine Linearbewegung des ersten bzw. des zweiten Schlittens und des optionalen dritten Schlittens umzusetzen. In Folge dessen erfährt der Schieber die für jeden Anwendungsfall frei konfigurierbare und optimierbare Transport- und Rückbewegung.

Der erste Antrieb und der zweite Antrieb sind bevorzugt mit einem Regler bzw. einem Steuer- und/oder Regelgerät verbunden, welches ausgehend von einer vorgegebenen Soll-Bewegung den ersten Antrieb und den zweiten Antrieb so steuert und regelt, dass der Schieber die gewünschte Soll-Bewegung ausführt.

Die Steuerung bzw. Regelung der Position des ersten Schlittens und die Steuerung bzw. Regelung der Position des zweiten Schlittens erfolgen in der Regel unabhängig voneinander. Es ist auch möglich, für jeden Antrieb einen gesonderten Regler vorzusehen.

Die Transportbewegung des Schiebers ist am besten zu realisieren, wenn eine Längsachse der zweiten Linearführung und der optionalen dritten Linearführung parallel zu der Auflage verläuft.

Die Rückbewegung des Schiebers und insbesondere das Abtauchen des Schiebers am Anfang der Rückbewegung und das anschließende Auftauchen des Schiebers am Ende der Rückbewegung lässt sich am besten realisieren, wenn die Längsachse der ersten Linearführung orthogonal zu der Auflage bzw. der Längsachse der Auflage verläuft.

Die erste Linearführung und die zweite Linearführung spannen also eine Ebene aus zwei Achsen auf. Im Zusammenhang mit der Figurenbeschreibung wird die Längsachse der zweiten und der dritten Linearführung als X-Achse bezeichnet und die Längsrichtung der ersten Linearführung als Y-Achse.

Damit sich in dem Pufferraum des Schachtmoduls ein möglichst quaderförmiger Stapel bildet, ist (in Transportrichtung gesehen) am hinteren Ende des Pufferraums ein verfahrbarer Anschlag vorgesehen. Dieser verfahrbare Anschlag hat eine Bewegungsrichtung parallel zu der Y-Achse, d.h. er kann nach oben aus dem Pufferraum des Schachtmoduls herausgefahren werden.

Diese Bewegung wird durch einen elektrischen Antrieb, erfindungsgemäß durch einen Linearmotor, einen Schrittmotor oder einen Servomotor ausgeführt. Diese Antriebe haben, wie bereits im Zusammenhang mit den Antrieben für den Schieber erwähnt, die positive Eigenschaft, dass die Position des Anschlags zu jedem Zeitpunkt bekannt ist. Der Anschlag muss daher nur so weit nach oben verfahren werden, dass sein unteres Ende etwas höher positioniert ist als die Oberseite des Stapels ist. Danach ist es möglich, die Transportbewegung zu beginnen, ohne dass es zu einer Kollision mit dem Anschlag kommen kann. Das hat Vorteile bei der Bearbeitung bzw. beim Transportieren niedriger Stapel von Faltschachteln, weil die Transportbewegung früher beginnen kann.

Aus dem Stand der Technik sind pneumatisch verfahrbare Anschläge bekannt. Bei diesen pneumatisch verfahrbaren Anschlägen ist die Position des Anschlags nicht bekannt. Sie wird daher über Endanschläge detektiert, so dass der Verfahrweg des Endanschlags unabhängig von der tatsächlichen Höhe des Stapels immer so groß sein muss wie die Höhe des größten Stapels, der in dem Schachtmodul gebildet werden kann.

Wenn also ein Stapel von Faltschachteln aus dem Schachtmodul heraustransportiert werden soll, der nur halb so hoch ist wie die maximal mögliche Höhe eines Stapels, dann ist bei einem herkömmlichen verfahrbaren Anschlag der Verfahrweg des Anschlags doppelt so groß wie notwendig. Das reduziert den Ausstoß der erfindungsgemäßen Transportvorrichtung. Der frühestmögliche Zeitpunkt ist erreicht, sobald das untere Ende des Anschlags etwas höher, z. B. einen Zentimeter, ist als der Stapel.

Der Anschlag kann in dieser Position verharren, bis der Stapel unter ihm hinweggeschoben wurde. Anschließend fährt der Anschlag wieder nach unten in seine Ursprungsposition. Auch dieser Weg benötigt nur etwa die Hälfte der Zeit, weil, wie in dem genannten Beispiel, der Anschlag nur den halben Weg zurückgelegt hat. Auch das ist eine effektive Maßnahme zur Erhöhung des Ausstoßes der erfindungsgemäßen Transportvorrichtung.

Die der Erfindung zugrundeliegende Aufgabe wird nochmals besser erfüllt, wenn gemäß in einer Transporteinrichtung zwei Schieber, zwei erste Linearführungen, zwei zweite Linearführungen sowie zwei erste Antriebe und zwei zweite Antriebe ausgebildet sind. Dies bedeutet, dass beide Schieber jeweils über eine erfindungsgemäße Bahnsteuerung, umfassend zwei Linearführungen und zwei Antriebe, verfügt.

Diese Schieber können jeder für sich und unabhängig voneinander bewegt werden. Es ist mit dieser Transportvorrichtung möglich, den ersten Schieber und den zweiten Schieber zeitlich versetzt im Wechsel zu benutzen, so dass bei einem ersten Stapel, der erste Schieber die Transportbewegung übernimmt. Währenddessen macht der zweite Schieber die Rückbewegung und begibt sich in die Startposition. Sobald in dem Schachtmodul ein zweiter Stapel fertig aufgeschichtet wurde, beginnt der zweite Schieber diesen zweiten Stapel in die Bündelvorrichtung zu schieben. Währenddessen taucht der erste Schieber, der sich am Ende des Transportwegs befindet, nach unten ab und taucht unter dem zweiten Stapel hindurch in Richtung der Startposition ab. Er transportiert dann den dritten Stapel.

Durch diese versetzte Arbeitsweise kann der Ausstoß nochmals deutlich erhöht werden. Letztendlich sind Schieber, Schlitten bzw. Linearführungen und Antriebe redundant vorhanden. Sie werden zeitlich versetzt eingesetzt.

Weitere Vorteile und vorteilhafte Ausgestaltung der Erfindung sind der nachfolgenden Zeichnung, der Beschreibung und den Patentansprüchen entnehmbar.

### Zeichnung

### Es zeigen

Figur 1: eine Seitenansicht eines Ausführungsbeispiels einer erfindungsgemäßen Transportvorrichtung, wobei sich der Schieber in der Startposition befindet,
Figuren 2 und 3: den Schieber während der Transportbewegung,
Figuren 4 und 5: den Schieber während der Rückbewegung,
Figur 6: eine Ansicht von vorne auf die erfindungsgemäße Transportvorrichtung,
Figuren 7 und 8 ein Ausführungsbeispiel bei dem zwei Schieber und zwei redundante Führungs- und Antriebsysteme vorhanden sind in verschiedenen Ansichten,
Figur 9 Beispiele von Trajektorien der Bewegung des Schiebers beim Transport sowie
Figur 10 ein Ablaufdiagramm eines erfindungsgemäßen Verfahrens.

### Beschreibung der Ausführungsbeispiele

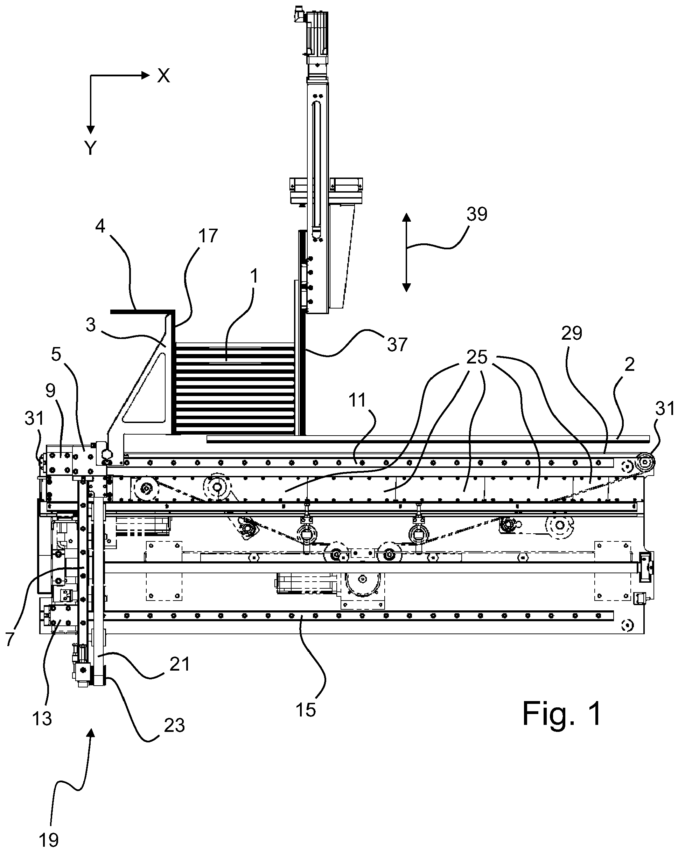

In den Figuren 1 bis 6 sind die wesentlichen Teile eines ersten Ausführungsbeispiels einer erfindungsgemäßen Transportvorrichtung in einer Seitenansicht dargestellt. Diese Darstellung enthält nicht alle Bauteile, um die Übersichtlichkeit zu erhalten. In allen Figuren werden für gleiche Bauteile die gleichen Bezugszeichen verwandt.

In der Figur 1 sind zwei Achsen, nämlich eine X-Achse und eine Y-Achse dargestellt. Die X-Achse verläuft in Richtung der Transportbewegung des Stapels 1. Die Y-Achse verläuft senkrecht dazu. Die bereits mehrfach erwähnte "Abtauchbewegung" des Schiebers 3 verläuft in Richtung der positiven Y-Achse.

In der Figur 1 ist der Stapel 1in seiner "Startposition" im Pufferraum des Schachtmoduls dargestellt. Der Stapel 1 ruht auf einer Auflage 2. Die Auflage 2 ist ortsfest; d. h. sie macht die Bewegung des Schlittens 3 nicht mit.

Der Transport des Stapels 1 erfolgt in der Figur 1 nach rechts in den Arbeitsraum einer nicht dargestellten Bündelvorrichtung. Dazu wird ein Schieber 3 angetrieben und dessen Bewegung auf den Stapel 1 übertragen. Der Schieber 3 ist so positioniert, dass er in Transportrichtung (Positive X-Achse) hinter dem Stapel 1, also sozusagen an der Rückseite des Stapels 1 anliegt.

Der Schieber 3 ist an einem ersten Schlitten 5 einer ersten Linearführung angebracht. Der erste Schlitten 5 bildet zusammen mit einer ersten Führungsschiene 7 die erste Linearführung. Die Ausrichtung der ersten Führungsschiene ist parallel zur Y-Achse und senkrecht zur X-Achse.

Die erste Führungsschiene 7 ist an einem zweiten Schlitten 9 einer zweiten Linearführung angeordnet. Zu der zweiten Linearführung gehört eine zweite Führungsschiene 11, die parallel zur X-Achse angeordnet ist. Bei diesem Ausführungsbeispiel ist die erste Führungsschiene 7 auch noch an einem optionalen dritten Schlitten 13 einer dritten Linearführung befestigt. Zu dem dritten Schlitten 13 bzw. der dritten Linearführung gehört eine dritte Führungsschiene 15.

Die zweite Führungsschiene 11 und die dritte Führungsschiene 15 verlaufen parallel zueinander in X-Richtung. Die dritte Linearführung dient dazu, die Führung des Schiebers 3 zu verbessern, so dass der Schieber 3 die zum Transport des Stapels 1 erforderlichen Antriebskräfte in Richtung der X-Achse auf den Stapel 1 übertragen kann, ohne nach hinten auszuweichen.

Der Schieber 3 ist so ausgebildet, dass sein Befestigungspunkt an den ersten Schlitten 5 und seine Vorderkante 17 versetzt zueinander sind. Dadurch kann der Schieber 3 den Stapel 1 weit über das Ende der Auflage 2 sowie der zweiten und der dritten Führungsschiene 11 bzw. 15 hinaus (nach rechts in den Figuren 1 - 5) in den Arbeitsraum der nicht dargestellten Bündelvorrichtung schieben.

In der Figur 1 ist ein erster Antrieb 19, der den ersten Schlitten 5 auf der ersten Führungsschiene 7 in Richtung der Y-Achse bewegt, angedeutet. Der erste Antrieb 19 umfasst einen Zahnriemen 21, mehrere Zahnscheiben 23, von denen in der Figur 1 nur eine sichtbar ist, und einen elektrischen Antrieb, beispielsweise in Form eines Servomotors oder eines Schrittmotors.

Der elektrische Antrieb und ein Steuer- und/oder Regelgerät zum Ansteuern der Antriebe sind in der Figur 1 nicht dargestellt. Der Servomotor treibt eine der Zahnscheiben 23 an. Diese wiederum treibt den Zahnriemen 21 an. Da der erste Schlitten 5 mit dem Zahnriemen 21 verbunden ist, werden auf diese Weise der erste Schlitten 5 und mit ihm der Schieber 3 Richtung der Y-Achse bewegt. Die Funktionsweise eines solchen Linearantriebs und die dazu erforderliche Ansteuerung durch ein Steuer- und/oder Regelgerät sind dem einschlägigen Fachmann aus anderen Anwendungen bekannt und bedürfen daher keiner näheren Erläuterung.

In der Figur 1 sind zwei Ausführungsbeispiele eines zweiten Antriebs dargestellt. Zum einen ist ein Linearmotor dargestellt. Ein Stator 25 des Linearmotors ist in der Figur 1 gut zu erkennen. Das Gegenstück des Stators, der Läufer des Linearmotors ist in der Figur 1 nicht zu erkennen. Es wird vielmehr von dem ersten Schlitten 5 sowie dem Zahnriemen 21 weitestgehend verdeckt.

Außerdem ist in der Figur 1 ein zweites Ausführungsbeispiel eines erfindungsgemäßen zweiten Antriebs dargestellt. Es ist konstruktiv so ausgebildet wie der erste Antrieb: Er umfasst einen Zahnriemen 29, Zahnscheiben 31 und einen elektrischen Antrieb. Der elektrische Antrieb ist auch hier wieder nicht sichtbar. Es gilt diesbezüglich das im Zusammenhang mit dem ersten Antrieb 19 Gesagte entsprechend.

Es versteht sich von selbst, dass es in der Praxis nicht erforderlich ist, den zweiten Antrieb redundant auszulegen. Die beiden Varianten sind nur zur Veranschaulichung in einer Figur dargestellt. In der Praxis wird man nur einen der beiden Antriebe realisieren.

Damit die Faltschachteln 33 sich in dem Pufferraum des Schachtmoduls sich nicht "ungeordnet" zu einem Stapel 1 aufschichten, ist an dem in Transportrichtung hinteren Ende des Pufferraums eine feststehende Stapelwand 4 vorgesehen. Aus dem gleichen Grund ist an dem in Transportrichtung vorderen Ende des Pufferraums ein verfahrbarer Anschlag 37 dargestellt. Der verfahrbare Anschlag 37 ist der Figur 1 in seiner unteren Endposition dargestellt. Er kann zwischen dieser unteren Endposition und einer oberen Endposition, hin- und herbewegt werden. Diese Bewegungen verlaufen parallel zur Y-Achse und sind durch einen Doppelpfeil 39 angedeutet. Der erfindungsgemäße verfahrbare Anschlag 37 ist mit einem elektrischen Antrieb ausgestattet. Der Antrieb kann als elektrischer Linearantrieb oder ähnlich wie die Antriebe der Schlitten 5 und 9 ausgeführt sein. Es ist bevorzugt, wenn durch die Ansteuerung des Antriebs oder durch Positionssensoren (nicht dargestellt) auch die Position des Anschlags 37 in dem Steuer- und/oder Regelgerät bekannt ist.

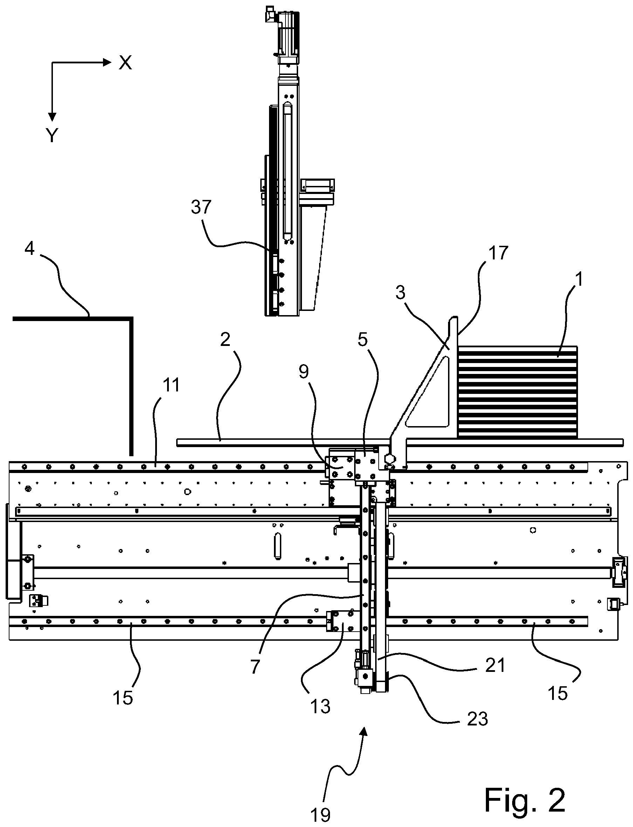

In der Figur 2 befindet sich der Anschlag 37 in der oberen Endposition; der Schieber 3 und der Stapel 1 sind in einer gegenüber der Figur 1 geänderten Position dargestellt sind. Der Schieber 3 und der Stapel 1 haben fast die gesamte Transportbewegung zurückgelegt, d.h. sie befinden sich in der Figur 2 in der Nähe des (in Figur 2 rechten) Endes der zweiten und dritten Führungsschiene 11, 15. In Figur 2 ist außerdem nur ein zweiter Antrieb (Linearmotor) dargestellt.

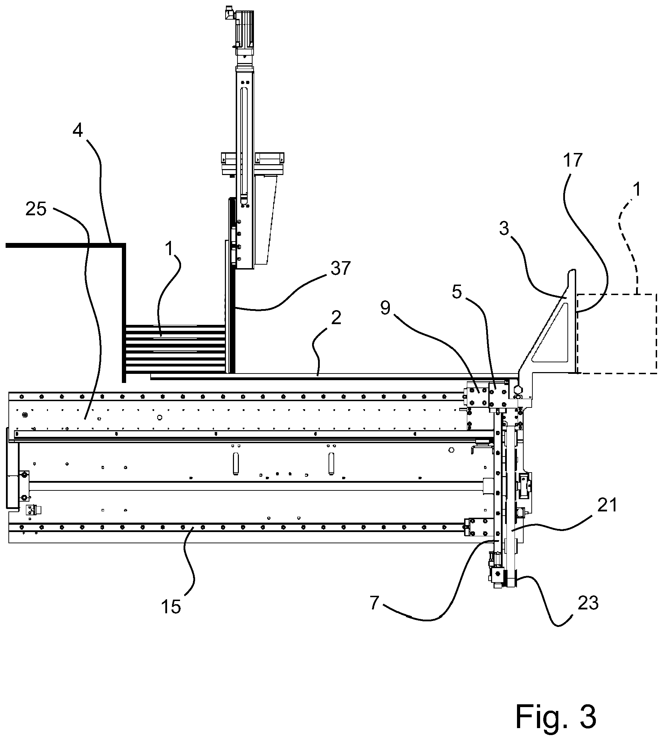

In der Figur 3 hat der Schieber 3 das Ende des Transportwegs erreicht. Der vom Schieber 3 zum Beispiel zu einer (nicht dargestellten Bündelvorrichtung) transportierte Stapel 1 ist in der Fig. 3 mit einer unterbrochenen Linie dargestellt.

In dieser Endposition des Schiebers 3 und des Stapels 1 wird deutlich, dass der Schieber 3 am Ende des Transportwegs noch die gleiche Höhe in Richtung der negativen Y-Achse hat wie in der Startposition; d. h. er ist nicht nach unten "abgetaucht", wie das bei einer herkömmlichen (Ketten-)Führung der Fall ist. Der erfindungsgemäße Schieber 3 schiebt und stützt den Stapel 1 während des gesamten Transports über dessen ganze Höhe mit seiner Vorderkante 17.

Aus der Figur 3 wird auch deutlich, dass sich die Hinterkante des Stapels 1, die an der Vorderkante 17 des Schiebers 3 anliegt, rechts neben der erfindungsgemäßen Transportvorrichtung befindet. Der Stapel 1 befindet in dieser Position schon im Arbeitsraum einer nicht dargestellten Bündelvorrichtung.

In der Figur ist ein "neuer" im Aufbau befindlicher Stapel 1 dargestellt. Dieser Stapel 1 liegt mit seiner Vorderseite an dem zwischenzeitlich wieder in der unteren Endposition befindlichen Schieber 37 an. Dieser neue Stapel 1 entsteht noch während des Transports des vorherigen Stapels in den Arbeitsraum der Bündelvorrichtung.

Sobald der Schieber 3 seine Rückbewegung in Richtung der Startposition (siehe Figur 1) begonnen hat, ist hinter dem im Arbeitstraum der Bündelvorrichtung befindlichen Stapel 1 Platz für einen Stichel der Bündelmaschine (nicht dargestellt) der von oben kommend hinter dem Stapel 1 herunterfährt, um das Umreifungsband um den Stapel 1 schlingen zu können.

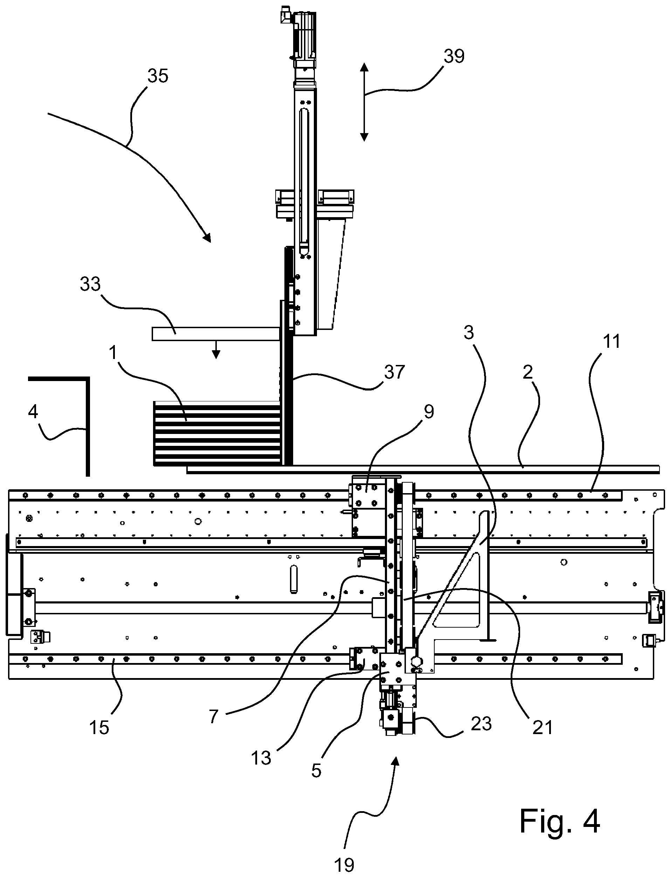

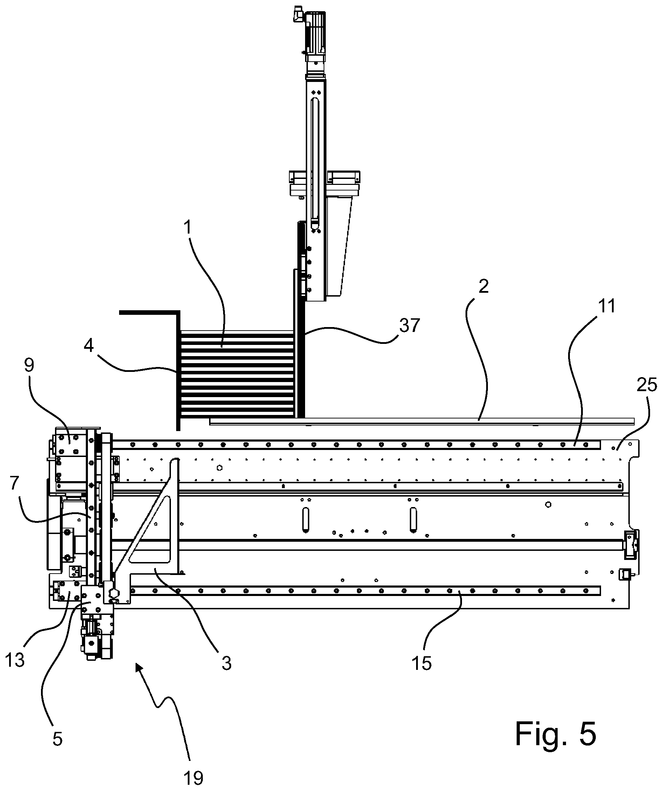

In den Figuren 4 und 5 befindet sich der Schieber 3 in der Rückbewegung. In der Figur 4 ist er in Richtung der positiven Y-Achse so weit abgetaucht, dass er sich unterhalb der Auflage 2 des Stapels 1 befindet. Er kann also unter der Auflage 2 zu seiner Startposition hinter den im Aufbau befindlichen "neuen" Stapel 1 (links in Figur 4) bewegt werden.

Das Abtauchen während der Rückbewegung ist notwendig, damit der Schieber 3 unter der Auflage 2 und dem sich zu diesem Zeitpunkt bildenden "neuen" Stapel 1 aus Faltschachteln 33 in die Startposition gelangen kann. Die Bewegung der Faltschachteln 33 in den Pufferraum des Schachtmoduls ist durch einen Pfeil 35 angedeutet. Die einzelnen Faltschachteln 33 werden entlang der durch den Pfeil 35 angedeuteten Bewegungsrichtung in den Pufferraum des Schachtmoduls in an sich bekannter Weise gefördert.

Damit die Faltschachteln 33 nicht "ungeordnet" in den Pufferraum des Schachtmoduls sich zu einem Stapel aufschichten, ist an dem in der Bewegungsrichtung hinteren Ende des Pufferraums der verfahrbare Anschlag 37 ist in Figur 4 in seiner unteren Endposition dargestellt. Er kann zwischen dieser unteren Endposition und einer oberen Endposition, hin- und herbewegt werden (siehe den Doppelpfeil 39).

In der Figur 5 ist der Schieber 3 unterhalb des sich bildenden Stapels 1 hindurchgefahren und hat in Richtung der X-Achse das Ende seiner Rückbewegung erreicht. Weil zwischen den in Figur 4 und 5 dargestellten Positionen Zeit vergangen ist, ist der Stapel 1 in der Figur 5 höher als in der Figur 4.

In der Figur 5 wird auch deutlich, dass sich die Vorderkante 17 des Schiebers 3 zwar (noch) unterhalb des Stapels 1, aber in x-Richtung gesehen bereits hinter der Hinterkante des Stapels 1 befindet. Es ist nun erfindungsgemäß möglich, durch entsprechendes Ansteuern des ersten Antriebs 19, den Schieber 3 in Richtung der negativen Y-Achse nach oben zu fahren, bis er sich hinter dem Stapel 1 (in der Startposition) befindet, so wie in der Figur 1 dargestellt.

Sobald der Stapel 1 die gewünschte Höhe hat, d.h. die gewünschte Zahl von Faltschachteln in dem Stapel 1 vorhanden sind, wird der verfahrbare Anschlag 37 nach oben so weit aus dem Pufferraum gefahren, dass der er die Transportbewegung des Stapels 1 nicht mehr behindert. Sobald das untere Ende des verfahrbaren Anschlags 37 höher ist als die Oberkante des Stapels 1, kann die Transportbewegung in Richtung der positiven X-Achse beginnen.

Wenn der Stapel 1 nur halb so hoch ist wie in den Figuren 1 bis 5 dargestellt, dann muss der verfahrbare Anschlag 37 auch nur den halben Weg nach oben zurücklegen, um den Weg für den Stapel 1 frei zu machen. Es ist ausreichend, wenn das untere Ende des verfahrbaren Anschlags 37 etwas höher ist als die Oberkante des Stapels 1. Bei einem weniger hohen Stapel 1 ist der Verfahrweg des verfahrbaren Anschlags 37 entsprechend kürzer ist, so dass Zeit für das Verfahren des Anschlags 37 sowohl beim Verfahren nach oben als auch bei der entgegengesetzten Bewegung eingespart wird. Da dem Steuer- und/oder Regelgerät die Position des Anschlags 37 bekannt ist, kann mit der Transportbewegung des Stapels 1 begonnen werden, unmittelbar nachdem sich der verfahrbare Anschlag 37 so weit nach oben bewegt hat, dass es zu keiner Kollision zwischen Anschlag 37 und Stapel 1 bzw. Schieber 3 mehr kommen kann. Das erhöht den Ausstoß der erfindungsgemäßen Transporteinrichtung weiter.

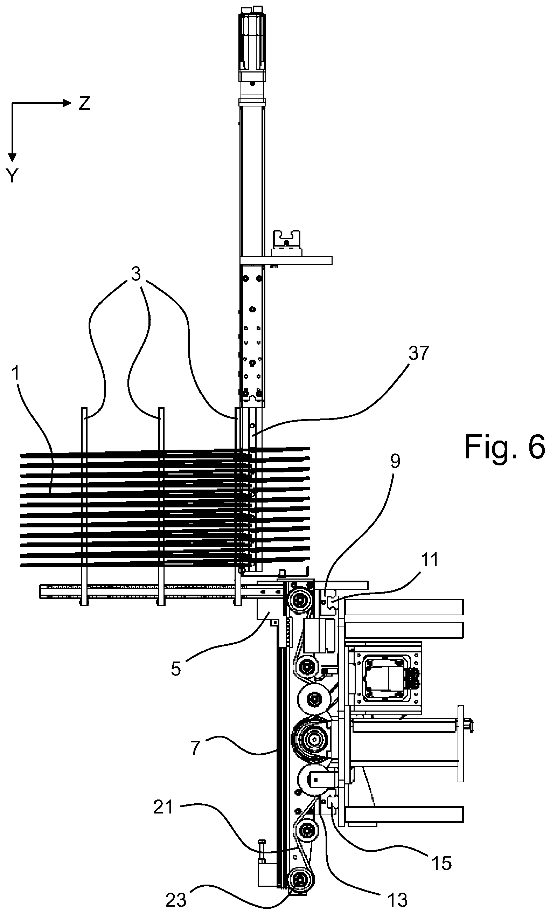

In der Figur 6 ist eine Ansicht von vorne auf das in den Figuren 1 bis 5 dargestellte Ausführungsbeispiel stark vereinfacht dargestellt. Die Blickrichtung ist vom Arbeitsraum der Bündelvorrichtung auf den Stapel 1 gerichtet, d.h. die Blickrichtung verläuft in Richtung der negativen X-Achse.

Die Auflage 2 ist in der Figur 6 nicht dargestellt. Es ist in dieser Ansicht gut zu erkennen, dass sich der Schieber 3 hinter dem Stapel 1 befindet. Es ist weiter zu erkennen, dass der Schieber 3 nach oben (d. h. in Richtung der negativen Y-Richtung) den Stapel 1 deutlich überragt. Das ist sub-optimal, weil dadurch die Abtauch- und die Auftauchbewegung des Schiebers 3 länger als nötig sind.

Optimal ist es, wenn der Schieber 3 nur soweit über die nicht dargestellte Auflage hinausragt, dass er den Stapel 1 um ein bis zwei Zentimeter (1-2 cm) überragt. Dann wird Zeit bei der Rückbewegung eingespart und die Belastungen der Führungen und Antriebe reduziert.

In dieser Ansicht ist auch gut zu erkennen, dass der Schieber 3 und der verfahrbare Anschlag 37 in Richtung einer Z-Achse versetzt zueinander angeordnet sind, so dass es bei der Transportbewegung in Richtung der X-Achse nicht zu einer Kollision diesen Baugruppen kommen kann.

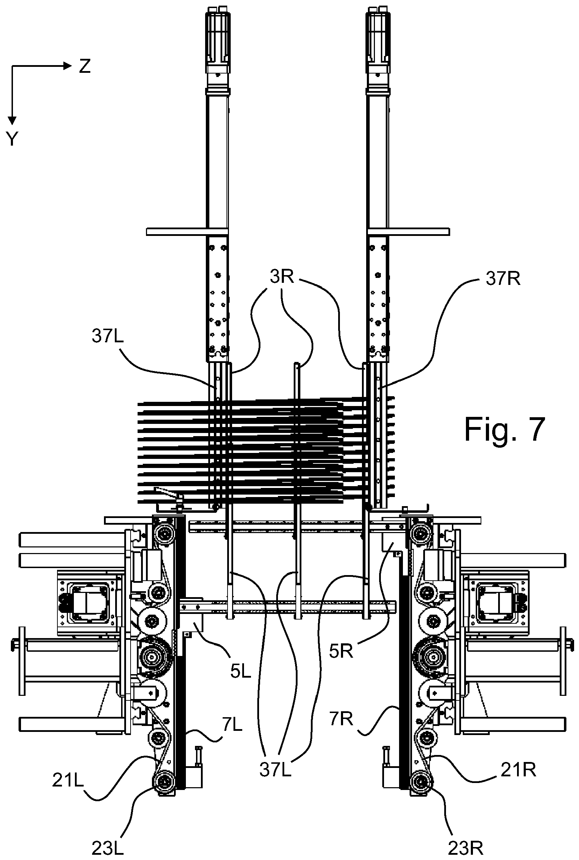

Die Bauteile der ersten Führung, nämlich der erste Schlitten 5 und die erste Linearführung 7, der zweiten Linearführung, nämlich der zweite Schlitten 9 und die zweite Führungsschiene 11 sowie der dritten Linearführung, nämlich der dritte Schlitten 13 und die dritte Führungsschiene 15 sind in der Figur 6 angedeutet. Die elektrischen Antriebe für den ersten Schlitten 5 und den zweiten Schlitten 9 sind in der Figur 6 und 7 nicht dargestellt.

In der Figur 7 ist ein weiteres Ausführungsbeispiel einer erfindungsgemäßen Transportvorrichtung dargestellt. Bei diesem Ausführungsbeispiel sind Schieber 3, erste Linearführung, zweite Linearführung und dritte Linearführung doppelt vorhanden. In dem dargestellten Ausführungsbeispiel ist die Vorrichtung spiegelsymmetrisch aufgebaut. Die verläuft senkrecht zur Zeichnungsebene. Daher sind die in der Figur 7 die an sich aus den Figuren 1 bis 6 bekannten Bauteile jeweils mit dem Index R bzw. L versehen, um die Gleichheit der Bauteile und das doppelte Vorhandensein der genannten Komponenten zu veranschaulichen.

In dieser Darstellung ist auch zu erkennen, dass die beiden Transportvorrichtungen bzw. die beiden Schieber 3R und 3L in Richtung der Z-Achse nicht versetzt zueinander, sondern in der gleichen Ebene angeordnet sind. Dass es trotzdem nicht zu Kollisionen zwischen den beiden Schiebern 3R und 31 kommt liegt daran, dass sie sich während der Transportbewegung und während der Rückbewegungen in unterschiedlichen Höhen (d. h. unterschiedlichen Y-Werten) bewegen.

Die Schieber 3R und 3 L arbeiten im Wechsel. Der Schieber 3R befindet sich hinter dem Stapel 1 und führt eine Transportbewegung aus, während sich der Schieber 3L auf der Rückbewegung befindet. Deshalb ist der Schieber 3L nach unten in Richtung der positiven Y-Achse abgetaucht. Er ist noch nicht vollständig abgetaucht. Wenn er so weit abgetaucht ist, dass er unter dem ihm entgegenkommenden Stapel 1 hindurch in seine Startposition gelangen kann, ist eine Kollision ausgeschlossen.

Durch diese doppelte Ausführung von Schieber, Linearführungen, Antrieben und anderen Baugruppen ist eine weitere Erhöhung des Ausstoßes möglich, bei gleichbleibender Belastung der einzelnen Komponenten. Weil quasi die gesamte Transportvorrichtung zweimal vorhanden ist, müssen die einzelnen Komponenten nicht schneller arbeiten, um trotzdem einen höheren Ausstoß realisieren zu können.

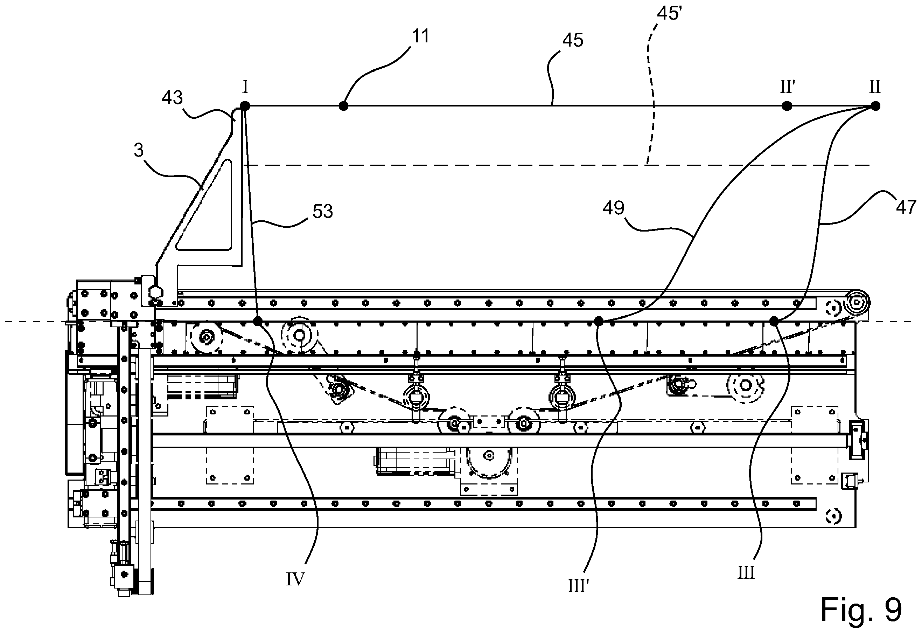

In der Figur 9 sind zur Veranschaulichung der Freiheitsgrade bei der Gestaltung und Steuerung der Transportbewegung und der Rückbewegung Trajektorien der Spitze des Schiebers 3 dargestellt. Die Figur 9 ist eine vereinfachte Darstellung der Figur 1 bei der viele Bezugszeichen und manche Bauteile weggelassen wurden, um die Übersichtlichkeit zu verbessern.

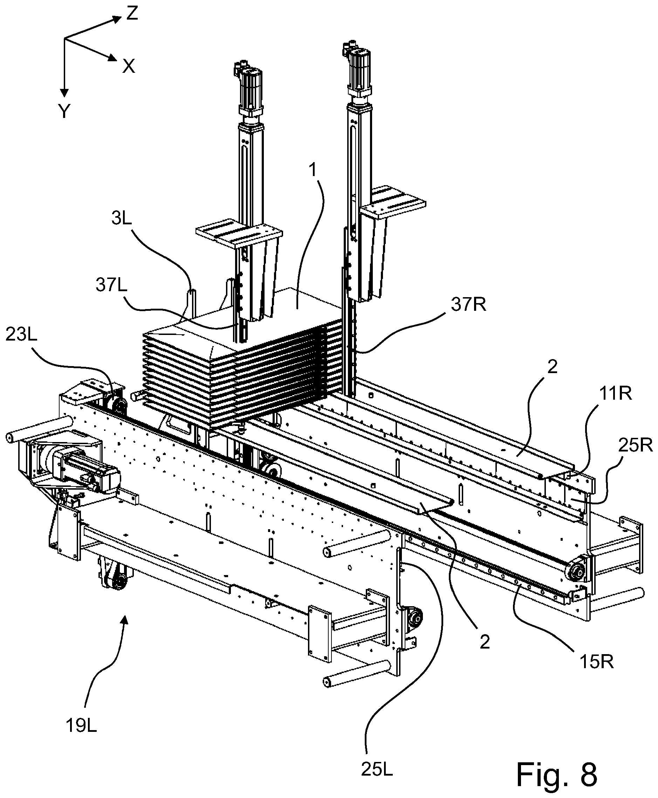

In der Figur 9 ist die Spitze 43 des Schiebers 3 in der Startposition dargestellt. Bei der Transportbewegung bewegt sich die Spitze des Schiebers 43 entlang der horizontal verlaufenden Linie von der Startposition I bis zum Endpunkt II. Die Transportbewegung zwischen der Startposition I und dem Endpunkt II ist durch eine Linie 45 angedeutet. Wenn nun beispielsweise kürzere Faltschachteln zu einem Stapel 1 aufgeschichtet werden, dann ist es auch möglich, die Startposition I des Schiebers 3 ausgehen von der in Figur 8 dargestellten Position etwas nach links zu verschieben (nicht dargestellt). Dadurch wird die Transportbewegung verkürzt, wenn man unterstellt, dass der Endpunkt bei II nicht verändert wird. Das Gleiche gilt natürlich auch für die Rückbewegung von der Endposition 2, so dass sich die Taktzeiten aufgrund der Verkürzung von Transportbewegung und Rückbewegung reduzieren und der Ausstoß erhöht wird.

In entsprechender Weise ist es auch möglich die Endposition II zu variieren, beispielsweise sie dort festzusetzen, wo in der Figur 8 der Punkt II' eingezeichnet ist.

Wenn die Höhe der Stapel 1 niedriger ist als die in den Figuren 1 bis 5 dargestellten Stapel 1, dann muss der Schieber 3 nicht so weit über die Auflage 2 hinausragen. In der Figur 98 ist eine Linie 45' eingezeichnet, die parallel zu der Linie 45 verläuft. Wenn der Schieber 3 nicht so weit über die Auflage 2 hinausragt, dann macht seine Spitzen 43 eine Bewegung entlang der Linie 45'. Dadurch werden die Abtauchbewegung und die Auftauchbewegung des Schiebers 3 verkürzt mit dem positiven Effekt, dass sich die Taktzeiten reduzieren und der Ausstoß erhöht wird.

Anhand der Figur 9 wird auch deutlich, dass die erfindungsgemäße unabhängige Steuerung der beiden Antriebe es ermöglicht, die Rückbewegung entsprechend den gegebenen Randbedingungen zu optimieren.

In der Figur 8 ist eine erste "Abtauchkurve" in Form einer Trajektorie 47 dargestellt, bei der die Spitze 43 des Schiebers 3 und mit ihr der gesamte Schieber 3 relativ schnell und steil nach unten abtauchen. Bereits am Punkt III hat der Schieber bzw. die Spitze 43 den tiefsten Punkt erreicht und kann somit unter einem entgegenkommenden Stapel 1, d.h. einem Stapel, der sich auf der Ablage 2 in Richtung der positiven X-Achse bewegt, hindurchtauchen. Diese Situation ist in den Figuren 4 und 5 dargestellt. Wenn der Stapel 1 (nicht dargestellt) kürzer ist, dann muss der Schieber 3 nicht so steil nach unten abtauchen; er kann eine weichere und weniger Antriebsleistung erfordernde Abtauchbewegung 49 ausführen. Infolgedessen erreicht der Schieber 3 den tiefsten Punkt, der mit III' gekennzeichnet ist, räumlich und in der Regel auch zeitlich später. Entsprechendes gilt auch für das Auftauchen des Schiebers am Ende der Rückbewegung. Das Ende der Rückbewegung ist bei IV. Ausgehend von diesem Endpunkt IV der Rückbewegung wird der Schieber 3 senkrecht, d. h. parallel zur Y-Achse, oder nahezu senkrecht entlang der Trajektorie 53 nach oben in die Startposition I bewegt. Diese steile Auftauchbewegung ist erforderlich, weil der Schieber 3 wie in Figur 5 dargestellt hinter dem sich aufbauenden neuen Stapel 1 mehr oder weniger senkrecht auftauchen muss.

Die Trajektorien 47 und 49 sind nur beispielhaft dargestellt. Zwischen ihnen alle Zwischenformen möglich. Es sind aber auch noch extremere Trajektorien möglich. Die Gestaltung der Trajektorien bietet ein erhebliches Optimierungspotential, um einerseits die Antriebe zu entlasten und trotzdem sicher eine Kollision des Schiebers 3 bei seiner Rückbewegung mit einem Stapel 1, der sich entweder gerade in der Startposition bildet oder einem Stapel von Faltschachteln, der schon transportiert wird (siehe Figur 7), zu verhindern. Dieses Optimierungspotential kann mit Hilde der erfindungsgemäßen Vorrichtung und des erfindungsgemäßen Verfahrens nutzbar gemacht werden, so dass sich der Ausstoß, ohne zwingend die Belastung der einzelnen Baugruppen und deren Verschleiß zu erhöhen.

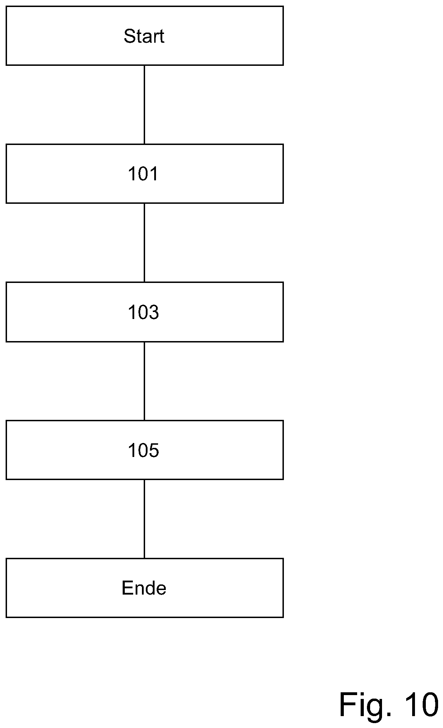

In der Figur 10 ist ein Ablaufdiagramm eines Ausführungsbeispiels eines erfindungsgemäßen Verfahrens dargestellt.

Nach dem Start werden in einem Block 101 die Hauptabmessungen (Länge, Höhe und ggf. auch die Breite) eingegeben.

Anschließend wird in dem Block 103 die Startposition (I bzw. I') und die Endposition (II bzw. II') in Abhängigkeit der Länge des Stapels (1) ermittelt.

In einem Block 105 werden die Abtauchbewegung (von II bzw. II' bis von III bzw. III') und die Auftauchbewegung (von IV bis I) in Abhängigkeit der Höhe des Stapels (1) ermittelt. Auf Basis dieser Teilbewegungen wird die Rückbewegung ermittelt.

Damit stehen die Trajektorien der Transport- und der Rückbewegung zur Verfügung und können in ein Steuerund/oder Regelgerät eingelesen werden.

## Patentansprüche

1. Vorrichtung zum Transportieren eines Stapels (1) von Faltschachteln umfassend eine Auflage (2) für den Stapel (1) von Faltschachteln und mindestens einen Schieber (3), wobei der mindestens eine Schieber (3) bei der Transportbewegung in vertikaler Richtung über die Auflage (2) hinausragt und mindestens ein Teil einer Rückbewegung so erfolgt, dass der mindestens eine Schieber (3) nicht über die Auflage (2) hinausragt, wobei der mindestens eine Schieber (3) auf einem ersten Schlitten (5) einer ersten Linearführung angebracht ist, **dadurch gekennzeichnet, dass** eine erste Führungsschiene (7) der ersten Linearführung an einem zweiten Schlitten (9) einer zweiten Linearführung befestigt ist.

2. Vorrichtung nach Anspruch 1, **dadurch gekennzeichnet, dass** parallel zu der zweiten Linearführung eine dritte Linearführung vorgesehen ist, und dass die erste Führungsschiene (7) der ersten Linearführung auch an einem dritten Schlitten (13) der dritten Linearführung befestigt ist.

3. Vorrichtung nach Anspruch 1 oder 2, **dadurch gekennzeichnet, dass** sie einen ersten Antrieb zum Verfahren des ersten Schlittens (4) auf der ersten Führungsschiene (7) aufweist.

4. Vorrichtung nach einem der vorhergehenden Ansprüche, **dadurch gekennzeichnet, dass** sie einen zweiten Antrieb zum Verfahren des zweiten Schlittens (9) auf der zweiten Führungsschiene (11) der zweiten Linearführung und des optionalen dritten Schlittens (13) auf der optionalen dritten Führungsschiene (15) der dritten Linearführung aufweist.

5. Vorrichtung nach Anspruch 3 oder 4, **dadurch gekennzeichnet, dass** der erste Antrieb und/oder der zweite Antrieb einen Servomotor, einen Schrittmotor oder einen Linearmotor umfasst.

6. Vorrichtung nach Anspruch 5, **dadurch gekennzeichnet, dass** der Servomotor oder der Schrittmotor über einen Zahnriemen (21, 29), eine Kette oder eine Gewindespindel mit dem ersten Schlitten (7) oder dem zweiten Schlitten (9) gekoppelt ist.

7. Vorrichtung nach Anspruch 5 oder 6, **dadurch gekennzeichnet, dass** der erste Antrieb und/oder der zweite Antrieb mit einem Regel- oder Steuergerät verbunden sind, und dass das Regel- oder Steuergerät so eigerichtet ist, dass er die Positionen des ersten Schlittens (5) und des zweiten Schlittens (9) unabhängig voneinander regelt.

8. Vorrichtung nach einem der vorhergehenden Ansprüche, **dadurch gekennzeichnet, dass** eine Längsachse der zweiten Linearführung und der optionalen dritten Linearführung im Wesentlichen parallel zu der Auflage (2) verläuft, und das eine Längsachse der ersten Linearführung im Wesentlichen senkrecht zu der Auflage (2) verläuft.

9. Vorrichtung nach einem der vorhergehenden Ansprüche, **dadurch gekennzeichnet, dass** an dem in Transportrichtung hinteren Ende eines Pufferraums ein verfahrbarer Anschlag (37) vorgesehen ist, und dass der Anschlag (37) von einem Servomotor, einem Schrittmotor oder einem Linearmotor angetrieben wird.

10. Verfahren zum Transportieren von mehreren Stapeln (1) nacheinander mittels eines Schiebers (3) mittels der Vorrichtung nach Anspruch 1 umfassend die Schritte:
Bilden eines Stapels (1) an einer Startposition (I) des Schiebers (3),
Ausführen einer Transportbewegung des Stapels (1) mittels des Schiebers (3) von der Startposition (I) zu einer Endposition (II, II') des Schiebers (3) auf einer geraden Trajektorie (45),
Ausführen einer Rückbewegung des Schiebers (3) von der Endposition (II, II') zu der Startposition (I) auf einer zusammengesetzten Trajektorie (47, 49, 53),
wobei sich der Schieber (3) mindestens in einem Abschnitt der Rückbewegung von einem Punkt (III, III') zu einem Endpunkt (IV) unterhalb der Auflage (2) befindet, und wobei die Transportbewegung und/oder die Rückbewegung in Abhängigkeit der Höhe und/oder Länge des Stapels (1) gesteuert wird.

11. Verfahren nach Anspruch 10, **dadurch gekennzeichnet, dass** die Transportbewegung bei kürzeren Stapeln (1) kürzer ist als bei längeren Stapeln (1).

12. Verfahren nach Anspruch 10 oder 11, **dadurch gekennzeichnet, dass** die Rückbewegung bei kurzen Stapeln (1) kürzer ist als bei langen Stapeln (1).

13. Verfahren nach einem der Ansprüche 10 bis 12, **dadurch gekennzeichnet, dass** die Abtauchbewegung des Schiebers (3) von der Endposition (II, II') zu dem einen Punkt (III, III') und die Auftauchbewegung des Schiebers (3) vom Endpunkt (IV) zur Startposition (I) bei niedrigen Stapeln (1) kürzer ist als bei hohen Stapeln (1).

## Claims

1. Device for transporting a stack (1) of folding boxes, comprising a support (2) for the stack (1) of folding boxes and at least one slider (3), the at least one slider (3) projecting beyond the support (2) in the vertical direction during the transport movement, and at least part of a return movement taking place in such a way that the at least one slider (3) does not project beyond the support (2), the at least one slider (3) being mounted on a first carriage (5) of a first linear guide, **characterized in that** a first guide rail (7) of the first linear guide is fastened to a second carriage (9) of a second linear guide.

2. Device according to claim 1, **characterized in that** a third linear guide is provided in parallel with the second linear guide, and **in that** the first guide rail (7) of the first linear guide is also fastened to a third carriage (13) of the third linear guide.

3. Device according to claim 1 or claim 2, **characterized in that** it has a first drive for moving the first carriage (4) on the first guide rail (7).

4. Device according to any of the preceding claims, **characterized in that** it has a second drive for moving the second carriage (9) on the second guide rail (11) of the second linear guide and the optional third carriage (13) on the optional third guide rail (15) of the third linear guide.

5. Device according to claim 3 or claim 4, **characterized in that** the first drive and/or the second drive comprises a servo motor, a stepper motor or a linear motor.

6. Device according to claim 5, **characterized in that** the servo motor or the stepper motor is coupled to the first carriage (7) or the second carriage (9) via a toothed belt (21, 29), a chain or a threaded spindle.

7. Device according to claim 5 or claim 6, **characterized in that** the first drive and/or the second drive are connected to an open-loop or closed-loop control unit, and **in that** the open-loop or closed-loop control unit is designed in such a way that it controls the positions of the first carriage (5) and the second carriage (9) independently of one another in a closed-loop manner.

8. Device according to any of the preceding claims, **characterized in that** a longitudinal axis of the second linear guide and the optional third linear guide extends substantially in parallel with the support (2), and **in that** a longitudinal axis of the first linear guide extends substantially perpendicularly to the support (2).

9. Device according to any of the preceding claims, **characterized in that** a movable stop (37) is provided at the rear end of a buffer space in the transport direction, and **in that** the stop (37) is driven by a servo motor, a stepper motor or a linear motor.

10. Method for transporting a plurality of stacks (1) one after the other by means of a slider (3) using the device according to claim 1, comprising the steps of:
forming a stack (1) at a starting position (I) of the slider (3),
carrying out a transport movement of the stack (1) by means of the slider (3) from the start position (I) to an end position (II, II') of the slider (3) on a straight trajectory (45),
carrying out a return movement of the slider (3) from the end position (II, II') to the start position (I) on a composite trajectory (47, 49, 53), wherein the slider (3) is located below the support (2) at least in a portion of the return movement from a point (III, III') to an end point (IV), and wherein the transport movement and/or the return movement is controlled in an open-loop manner depending on the height and/or length of the stack (1).

11. Method according to claim 10, **characterized in that** the transport movement is shorter for shorter stacks (1) than for longer stacks (1).

12. Method according to claim 10 or claim 11, **characterized in that** the return movement is shorter for short stacks (1) than for long stacks (1).

13. Method according to any of claims 10 to 12, **characterized in that** the downward movement of the slider (3) from the end position (II, II') to the one point (III, III') and the upward movement of the slider (3) from the end point (IV) to the starting position (I) is shorter for low stacks (1) than for high stacks (1) .

## Revendications

1. Dispositif de transport d'une pile (1) de boîtes pliantes, comprenant un support (2) pour la pile (1) de boîtes pliantes et au moins un coulisseau (3), dans lequel l'au moins un coulisseau (3) dépasse du support (2) lors d'un déplacement de transport dans une direction verticale et au moins une partie d'un déplacement de retour est effectuée de telle sorte que l'au moins un coulisseau (3) ne dépasse pas du support (2), dans lequel l'au moins un coulisseau (3) est installé sur un premier chariot (5) d'une première glissière linéaire, **caractérisé en ce qu'**un premier rail de guidage (7) de la première glissière linéaire est fixé sur un deuxième chariot (9) d'une deuxième glissière linéaire.

2. Dispositif selon la revendication 1, **caractérisé en ce qu'**est prévue une troisième glissière linéaire de manière parallèle à la deuxième glissière linéaire, et que le premier rail de guidage (7) de la première glissière linéaire est fié également sur un troisième chariot (13) de la troisième glissière linéaire.

3. Dispositif selon la revendication 1 ou 2, **caractérisé en ce qu'**il présente un premier entraînement destiné à déplacer le premier chariot (4) sur le premier rail de guidage (7).

4. Dispositif selon l'une quelconque des revendications précédentes, **caractérisé en ce qu'**il présente un deuxième entraînement pour déplacer le deuxième chariot (9) sur le deuxième rail de guidage (11) de la deuxième glissière linéaire et le troisième chariot (13) optionnel sur le troisième rail de guidage (15) optionnel de la troisième glissière linéaire.

5. Dispositif selon la revendication 3 ou 4, **caractérisé en ce que** le premier entraînement et/ou le deuxième entraînement comprennent un servomoteur, un moteur pas à pas ou un moteur linéaire.

6. Dispositif selon la revendication 5, **caractérisé en ce que** le servomoteur ou le moteur pas à pas est couplé au premier chariot (7) ou au deuxième chariot (9) par l'intermédiaire d'une crémaillère (21, 29), d'une chaîne ou d'une broche filetée.

7. Dispositif selon la revendication 5 ou 6, **caractérisé en ce que** le premier entraînement et/ou le deuxième entraînement sont reliés à un appareil de régulation ou de commande, et que l'appareil de régulation ou de commande est mis au point de telle sorte qu'il régule les positions du premier chariot (5) et du deuxième chariot (9) indépendamment l'un de l'autre.

8. Dispositif selon l'une quelconque des revendications précédentes, **caractérisé en ce qu'**un axe longitudinal de la deuxième coulisse linéaire et de la troisième coulisse linéaire optionnelle s'étend de manière sensiblement parallèle au support (2), et qu'un axe longitudinal de la première coulisse linéaire s'étend de manière sensiblement perpendiculaire par rapport au support (2).

9. Dispositif selon l'une quelconque des revendications précédentes, **caractérisé en ce qu'**une butée (37) pouvant être déplacée est prévue sur l'extrémité arrière, dans la direction de transport, d'un espace tampon, et que la butée (37) est entraînée par un servomoteur, un moteur pas à pas ou un moteur linéaire.

10. Procédé de transport de plusieurs piles (1) les unes après les autres au moyen d'un coulisseau (3) au moyen du dispositif selon la revendication 1, comprenant les étapes:
de formation d'une pile (1) sur une position de départ (I) du coulisseau (3),
d'exécution d'un déplacement de transport de la pile (1) au moyen du coulisseau (3) depuis la position de départ (I) vers une position finale (II, II') du coulisseau (3) sur une trajectoire droite (45),
d'exécution d'un déplacement de retour du coulisseau (3) depuis la position finale (II, II') vers la position de départ (I) sur une trajectoire (47, 49, 53) composée, dans lequel le coulisseau (3) se trouve au moins dans une section du déplacement de retour d'un point (III, III') à un point final (IV) sous le support (2), et dans lequel le déplacement de transport et/ou le déplacement de retour sont commandés en fonction de la hauteur et/ou de la longueur de la pile (1).

11. Procédé selon la revendication 10, **caractérisé en ce que** le déplacement de transport pour des piles (1) plus courtes est plus court que pour des piles (1) plus longues.

12. Procédé selon la revendication 10 ou 11, **caractérisé en ce que** le déplacement de retour pour des piles (1) courtes est plus court que pour des piles (1) longues.

13. Procédé selon l'une quelconque des revendications 10 à 12, **caractérisé en ce que** le déplacement de plongée du coulisseau (3) depuis la position finale (II, II') vers un point (III, III') et le déplacement de remontée du coulisseau (3) depuis le point final (IV) vers la position de départ (I) pour des piles (1) basses sont plus courts que pour des piles (1) hautes.
